# EUROPÄISCHE PATENTSCHRIFT

(11) **EP 0 444 321 B1**
(45) Veröffentlichungstag und Bekanntmachung des Hinweises auf die Patenterteilung: **20.04.1994**
(21) Anmeldenummer: 90125803.8
(22) Anmeldetag: 29.12.1990
(51) Int. Cl.: F16F 9/05

(54) **Rollbalg-Luftfeder mit einem Schlauchrollbalg aus elastorem Werkstoff**
Rolling-lobe airspring with a tubular rolling lobe made of an elastomer
Ressort pneumatique à soufflet roulant tubulaire en élastomère

(30) Priorität: 02.03.1990 DE 4006480
(43) Veröffentlichungstag der Anmeldung: 04.09.1991
(73) Patentinhaber: Continental Aktiengesellschaft, 30165 Hannover (DE)
(72) Erfinder: Schneider, Eckhard, Dr., W-3160 Lehrte (DE)

(56) Entgegenhaltungen:
- EP-A- 0 123 171
- EP-A- 0 184 974
- DE-U- 8 601 331
- FR-A- 357 084
- FR-A- 2 523 679
- GB-A- 217 321
- GB-A- 1 094 525

## Beschreibung

Die Erfindung betrifft eine Rollbalg-Luftfeder mit einem Schlauchrollbalg aus elastomerem Werkstoff, der mindestens einen kernlosen Endabschnitt aufweist, der an einer Armatur durch Einspannen zwischen der Armatur und einem Spannstück befestigt ist, mit den im Oberbegriff des Patentanspruchs 1 aufgeführten Merkmalen.

Einfach-zylindrische oder konische Rollbälge werden für Luftfederungen für Straßenfahrzeuge verwendet. Sie sind in Form eines aus elastomeren Werkstoffen mit Verstärkungseinlagen bestehenden, hohlzylindrischen Schlauchkörpers hergestellt. Die Endabschnitte dieses, einen Schlauchrollbalg darstellenden Schlauchkörpers müssen an den relativ zueinander beweglichen Halteelementen der gegeneinander abgefederten Fahrzeugteile befestigt werden.

Für die Befestigung der Endabschnitte des Schlauchrollbalges an Stützelementen oder anderen Armaturen haben sich im allgemeinen metallische Spannringe bewährt. Um eine sichere Einspannung bei hohen Zugkräften zu erreichen, wird der Spannring durch plastisches Verformen fest aufgebracht. Ein zu starkes Fressen durch den Spannring auf den Endabschnitt kann aber nachteilig sein, da es zu einer Beschädigung des elastomeren Werkstoffes und der Festigkeitsträgerlage kommen kann. Eine Beschädigung der Befestigungsarmaturen kann auch nicht ausgeschaltet werden.

Aus der EP-A-0 123 171 ist eine Luftfeder bekannt, die einen kernlosen Luftfederbalg aufweist, der mit seinem unteren Ende an einer Armatur durch ein verschraubbares Spannstück befestigt ist. Das Spannstück weist einen zentrischen Gewindeansatz auf, der ein Trägerteil durchdringt und mit einer Gegenmutter gegen dieses gezogen wird. Die Armatur wird durch das mit der Gewindemutter angezogene Spannstück gegen das Trägerteil gehalten. Eine zu starke Verschraubung des Spannstückes birgt die Gefahr, daß der eingespannte Endabschnitt des Luftfederbalges beschädigt wird.

Der Erfindung liegt die Aufgabe zugrunde, eine Rollbalg-Luftfeder der eingangs beschriebenen Art derart auszugestalten, daß eine sichere, baulich und montagemäßig einfache Befestigung geschaffen wird, bei der die Gefahr der Beschädigung der eingebetteten Festigkeitsträgerlage minimiert ist.

Die Aufgabe wird erfindungsgemäß durch die im Kennzeichen des Anspruchs 1 genannten Merkmale gelöst.

Armatur und Spannstück nehmen den Endabschnitt des Schlauchrollbalges zwischen ihren konischen Einspannflächen auf. Dabei ist das Spannstück im Inneren des Endabschnittes und die Armatur am Außenumfang des Endabschnittes angeordnet. Die Armatur wird im eingebauten Zustand der Luftfeder am abzufedernden Fahrzeugteil befestigt. Das Spannstück ist gegenüber dieser befestigten, stationären Armatur schwimmend angeordnet, was eine axiale Verschiebbarkeit des Spannstückes ermöglicht. Die axiale Verschiebbarkeit des konischen Spannstückes bewirkt, daß das Spannstück im Betrieb des Schlauchrollbalges gegen die Armatur gezwängt wird, weil es durch den Innendruck in Richtung der Armatur beaufschlagt wird. Dieses führt zu einer Verspannung des Endabschnittes in dem Einspannspalt zwischen den konischen Einspannflächen von Armatur und Spannstück. Der Innendruck des Schlauchrollbalges bewirkt die Befestigung des Endabschnittes. Der Innendruck der Luftfeder wird vorteilhaft für eine Selbstspannfunktion des Schlauchrollbalges ausgenutzt.

Die Einspannteile weisen vorzugsweise kreisförmige Einspannquerschnitte auf, wobei das Spannstück konzentrisch zu der Armatur angeordnet ist.

Eine vorteilhafte Ausgestaltung der Erfindung wird im Kennzeichen des Anspruchs 2 offenbart. Das Spannstück ist ein stumpfkegeliger Zylinderkörper, dessen Außenmantel die Einspannfläche des Spannstückes bildet.

In weiterer vorteilhafter Ausgestaltung weist das Spannstück gemäß Anspruch 3 einen zentrischen Führungsansatz auf, der in einer zentrischen Bohrung der Armatur axial verschiebbar angeordnet ist. Das durch den Innendruck der Luftfeder beaufschlagbare Spannstück wird durch diese Ausbildung zentrisch zur umgebenden Armatur geführt, so daß der umlaufende Einspannspalt in seiner ganzen Umfangserstreckung die gleiche lichte Weite aufweist.

Ist das Spannstück gemäß Anspruch 4 topfartig ausgebildet, kann eine beträchtliche Gewichtsersparnis des gesamten konfektionierten Schlauchrollbalges erreicht werden.

Eine weitere vorteilhafte Ausgestaltung wird im Kennzeichen des Anspruchs 5 offenbart. Die flexiblen Rastzähne können beispielsweise bei einem Spannstück aus einem geeigneten Kunststoff ausgebildet sein. Das Einfassen dieser flexiblen Rastzähne in entsprechende flexible Rastzähne einer Öffnung einer Armatur ermöglicht eine sichere Klemmung, so daß bei einer Druckentlastung des Schlauchrollbalges eine Zugkraftübertragung stattfinden kann.

Eine weitere vorteilhafte Ausgestaltung wird durch die Merkmale des Anspruchs 6 gekennzeichnet. Im Bereich der umlaufenden Umfangsrippe wird eine starke Einschnürung der Wand des Endabschnittes bewirkt, so daß ein Durchrutschen des Endabschnittes bei einer Zugkraftbelastung verhindert wird.

Gemäß der Ausbildung in Anspruch 7 ist der Außendurchmesser der Umfangsrippe geringfügig größer als der drucklose Innendurchmesser des Endabschnittes des Schlauchkörpers vor Erstinbetriebnahme. Diese Ausbildung ist eine Hilfe für die Montage. Das Spannstück wird nahezu bündig in das Innere des Endabschnittes des Schlauchrollbalges hineingesteckt und klemmt sich dort fest und schließt den Schlauchquerschnitt luftdicht ab. Das Ende des Schlauchrollbalges kann nun in eine feststehende Armatur, beispielsweise an einem Fahrzeug, geführt werden. Nach einer Druckbeaufschlagung des Schlauchrollbalges wird der Endabschnitt in einfacher Weise an dieser Armatur befestigt bzw. verspannt. Während des Einspannens fügt sich der Endabschnitt in die Konizität der Einspannung.

Durch die Erfindung wird der Innendruck des Schlauchrollbalges im Betrieb der Luftfederanlage für eine Selbstverspannung durch axiale Verschiebbarkeit des inneren Spannstückes ausgenutzt. Der den Einspannspalt darstellende Zwischenraum zwischen konischem Spannstück und konischem Außenteil (Armatur) mit der eingeklemmten Balgwandung wird zusammengepreßt. Dadurch wird der Schlauchrollbalg festgespannt und abgedichtet.

Anhand der Zeichnung werden nachstehend drei Ausführungsbeispiele der Erfindung näher erläutert. Es zeigt
- Fig. 1: im Axialschnitt die obere Einspannung eines Endabschnittes eines Schlauchrollbalges,
- Fig. 2: im Axialschnitt eine modifizierte Einspannung eines Schlauchrollbalgendabschnittes zwischen zwei konischen Einspannflächen,
- Fig. 3: im Axialschnitt die Einspannung eines Schlauchrollbalg-Endabschnittes zwischen zwei konischen Einspannflächen, die voneinander abweichende Neigungen aufweisen.

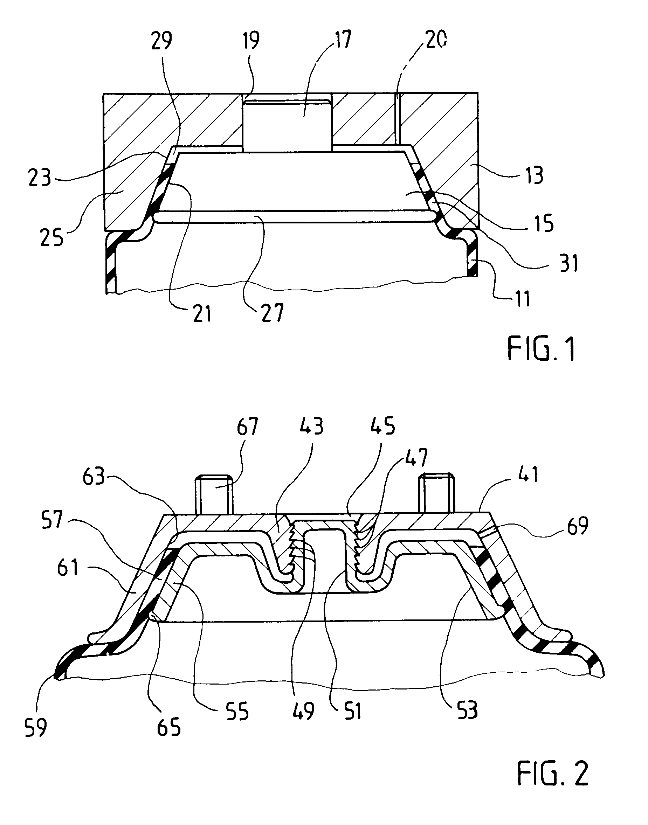

In der Fig. 1 wird die Einspannung eines wulstlosen Schlauchrollbalges 11 zwischen einer an einem hier nicht dargestellten Fahrzeugteil befestigten Armatur 13 und einem konzentrischen Spannstück 15 gezeigt. Das Spannstück 15 ist mit einem zentrischen Ansatz 17 in einer zentrischen Bohrung 19 der Armatur 13 axial geführt.

Das Spannstück 15 ist ein stumpfkegeliger Zylinderkörper, der einen konisch verlaufenden Außenmantel 21 aufweist, dessen Neigung der Neigung einer inneren, konischen Umfangsfläche 23 der Armatur 13 entspricht. Die innere Umfangsfläche 23 ist in einem glockenförmigen Ansatz 25 der Armatur 13 angeordnet.

Das Spannstück 15 weist an seinem dem Schlauchrollbalg 11 zugewandten Ende eine Umfangsrippe 27 auf, die den zwischen den Umfangsflächen 21 und 23 liegenden Einspannspalt 29 an dieser Stelle wesentlich verkleinert. Zwischen den Umfangsflächen 21 und 23 ist die Wand eines Endabschnittes 31 des Schlauchrollbalges 11 eingespannt, der auf seinen Betriebsdurchmesser ausgedehnt dargestellt ist.

Der sich in seinem Volumen während der Druckbeaufschlagung ändernde Zwischenraum zwischen dem Spannstück 15 und der Armatur 13 wird über eine Bohrung 20 entlüftet.

Der Außendurchmesser der Umfangsrippe 27 ist etwas größer als der Innendurchmesser des Schlauchrollbalges 11 im drucklosen Zustand vor der Erstinbetriebnahme. Bei der Montage wird das Spannstück 15 in den Endabschnitt 31 des Schlauchrollbalges 11 auf die in der Fig. 1 gezeigte Höhe eingesteckt. Bei der Montage am Fahrzeug kann nun der Endabschnitt 31 einfach in die Armatur 13 eingeführt werden. Bei einer Druckbeaufschlagung des Schlauchrollbalges 11 wirkt der Innendruck gegen das Spannstück 15, so daß eine Selbsteinspannung des Endabschnittes 31 des Schlauchrollbalges 11 zwischen den Einspannflächen 21 und 23 erreicht wird.

Die modifizierte Ausführungsform nach Fig. 2 weist aus Gründen der Gewichtsersparnis glockenförmige, dünnwandige Einspannteile auf, die vorteilhafterweise aus einem geeigneten Kunststoff gefertigt sind. Die am abzufedernden Fahrzeug befestigte Armatur 41 weist einen zentrischen, nach innen gerichteten, zylindrischen Ansatz 43 auf, der mit einer Öffnung 45 versehen ist. Die Innenwand der Öffnung 45 ist mit flexiblen Rastzähnen 47 ausgestattet. Die flexiblen Rastzähne 47 fassen im dargestellten Betriebszustand der Einspannung in flexible Rastzähne 49 eines zentrischen Ansatzes 51 eines topfförmigen Spannstückes 53. Der Außenmantel 55 des Spannstückes 53 verläuft im Axialschnitt gesehen sich konisch erweiternd in Richtung eines über einen Endabschnitt 57 eingespannten Schlauchrollbalges 59.

Das konische Spannstück 53 wird von einem sich unter gleicher Neigung erweiternden konischen Umfangsansatz 61 umgeben. Zwischen dem Außenmantel 55 und dem Ansatz 61 ist ein Einspannspalt 63 gebildet, der an seinem unteren Ende durch eine Umfangsrippe 65 des Spannstückes 53 verkleinert ist.

Die Armatur 41 wird über Gewindestehbolzen 67 an einem Fahrzeugteil befestigt. Der sich in seinem Volumen während der Druckbeaufschlagung ändernde Zwischenraum zwischen dem Spannstück 53 und der Armatur 41 wird über eine Bohrung 69 entlüftet.

Das Spannstück 53 wird bei der Vormontage in den Endabschnitt 57 des Schlauchrollbalges 59 gesteckt. Die Fertigmontage kann am Fahrzeug selbst stattfinden. Die Armatur 41 ist an dem abzufedernden Fahrzeugteil befestigt. Das Ende des Schlauchrollbalges 59 wird in die Armatur 41 eingeführt, so daß sich die zentrischen, mit Rastzähnen versehenen Ansätze 43 und 51 gegenüberstehen. Bei der Druckbeaufschlagung im Betrieb der Luftfederanlage springen die Rastzähne 47 und 49 ineinander, so daß auch im eventuellen drucklosen Zustand der Luftfederanlage eine sichere Verspannung gewährleistet ist. Bei einer Druckentlastung des Schlauchrollbalges können Zugkräfte übertragen werden.

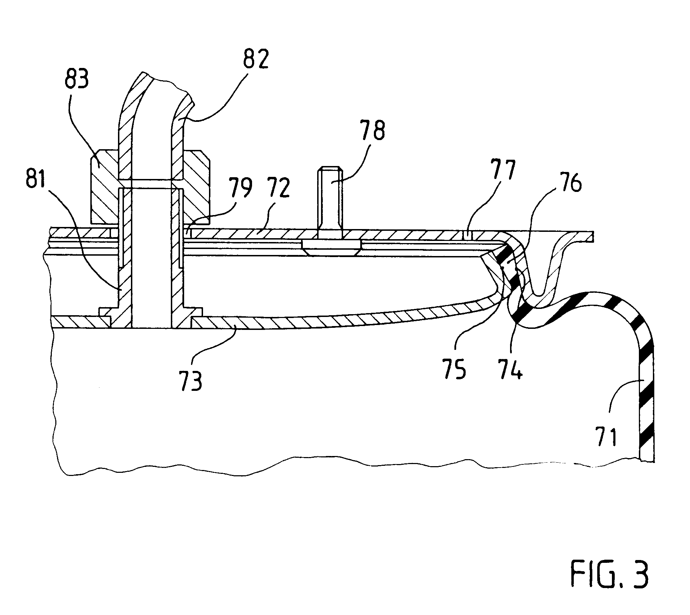

Bei der Einspannung gemäß Fig. 3 wird der wulstlose Schlauchrollbalg 71 zwischen einer äußeren Armatur 72 und einem inneren Spannstück 73 eingespannt. Die konischen Einspannflächen 74 und 75 von Armatur 72 und Spannstück 73 weisen unterschiedliche Konizität auf, wobei die unterschiedlichen Neigungen der Einspannflächen 74 und 75 so ausgerichtet sind, daß die engste Stelle des Einspannspaltes 76 an seinem dem Hauptkörper des Schlauchrolbalges 71 zugewandten Ende liegt.

Der Raum zwischen Armatur 72 und Spannstück 73 ist über eine Entlüftungsbohrung 77 mit der Atmosphäre verbunden. Die äußere Armatur 72 weist Befestigungsschrauben 78 auf. Das innere Spannstück 73 weist einen zentrischen, nach oben durch eine Bohrung 79 der Armatur 72 ragenden, mit Außengewinde versehenen Hohlstutzen 81 auf, der außerhalb der Armatur 72 mit einer Luftanschlußleitung 82 über eine überwurfmutter 83 verschraubt ist.

## Patentansprüche

1. Rollbalg-Luftfeder mit einem Schlauchrollbalg (11,59,71) aus elastomerem Werkstoff, der mindestens einen kernlosen Endabschnitt (31,57) aufweist, der an einer Armatur durch Einspannen zwischen der Armatur (13,41,72) und einem Spannstück (53,15,73) befestigt ist, mit folgenden Merkmalen:
- Armatur (13; 41) und Spannstück (15; 53) weisen zusammenwirkende konische Einspannflächen auf,
- das konische Spannstück (15; 53) ist in der Armatur (13; 41) unter Bildung eines Einspannspaltes (29; 63) axial verschiebbar angeordnet,
- das Spannstück (15; 53) schließt den Querschnitt des eingespannten Endabschnittes (23; 57) luftdicht ab,
**gekennzeichnet durch folgende Merkmale**:
- die Armatur (13; 41) ist direkt mit dem abzufedernden Fahrzeugteil verbindbar,
- das Spannstück (15; 53) ist unter Druckbeaufschlagung der Luftfeder relativ zur Armatur (13; 41) gegen die Armatur (13; 41) bewegbar.

2. Rollbalg-Luftfeder nach Anspruch 1, dadurch gekennzeichnet, daß das Spannstück (15) kegelstumpfartig ausgebildet ist.

3. Rollbalg-Luftfeder nach Anspruch 1 oder 2, dadurch gekennzeichnet, daß das Spannstück (15) einen zentrischen Führungsansatz (17) aufweist, der in einer Bohrung (19) der Armatur (13) axial verschiebbar angeordnet ist.

4. Rollbalg-Luftfeder nach Anspruch 1 oder 3, dadurch gekennzeichnet, daß das Spannstück (53) topfartig ausgebildet ist, wobei sich der Außenmantel (55) des Spannstückes (53) zum freien Ende hin konisch erweitert.

5. Rollbalg-Luftfeder nach Anspruch 1, 2 oder 4, dadurch gekennzeichnet, daß das Spannstück (53) einen zentrischen Ansatz (51) aufweist, der auf seinem Umfang mit flexiblen Rastzähnen (49) versehen ist, die im zusammengebauten Zustand des Luftfeder-Schlauchrollbalges in flexible Rastzähne (47) einer Öffnung (45) der Armatur (41) fassen.

6. Rollbalg-Luftfeder nach einem der Ansprüche 1 bis 5, dadurch gekennzeichnet, daß das Spannstück (15; 53) und/oder die Armatur (13; 41) eine umlaufende Umfangsrippe (27; 65) aufweisen, die den Einspannspalt (29; 63) verengt.

7. Rollbalg-Luftfeder nach Anspruch 6, dadurch gekennzeichnet, daß der Außendurchmesser der Umfangsrippe (27; 65) geringfügig größer ist als der drucklose Innendurchmesser des Endabschnittes (23; 57) des Schlauchrollbalges (11; 59) vor Ernstinbetriebnahme.

8. Rollbalg-Luftfeder nach Anspruch 6, dadurch gekennzeichnet, daß die Einspannfläche des Spannstückes und/oder die Einspannfläche der Armatur mehrere übereinander angeordnete Umfangsrippen aufweist.

9. Rollbalg-Luftfeder nach einem der Ansprüche 1 bis 8, dadurch gekennzeichnet, daß die Einspannflächen (74, 75) von Spannstück (73) und Armatur (72) unterschiedliche Konizität aufweisen.

## Claims

1. Roller bellows pneumatic spring, having a tubular roller bellows (11, 59, 71) which is formed from elastomeric material and has at least one coreless end portion (31, 57), which is mounted on a fitting by being clamped in position between the fitting (13, 41, 72) and a clamping member (53, 15, 73), said spring having the following features:
- fitting (13; 41) and clamping member (15; 53) have co-operating conical clamping faces,
- the conical clamping member (15; 53) is disposed in an axially displaceable manner in the fitting (13; 41) so as to form a clamping gap (29; 63),
- the clamping member (15; 53) seals the cross-section of the clamped end portion (23; 57) in an air-tight manner,
characterised by the following features:
- the fitting (13; 41) is directly connectable to the vehicle component part to be cushioned,
- the clamping member (15; 53) is displaceable towards the fitting (13; 41) when the pneumatic spring is pressure-loaded relative to the fitting (13; 41).

2. Roller bellows pneumatic spring according to claim 1, characterised in that the clamping member (15) has a frustoconical configuration.

3. Roller bellows pneumatic spring according to claim 1 or 2, characterised in that the clamping member (15) has a central guide extension member (17), which is disposed in an axially displaceable manner in a bore (19) in the fitting (13).

4. Roller bellows pneumatic spring according to claim 1 or 3, characterised in that the clamping member (53) has a cup-shaped configuration, the external surface (55) of the clamping member (53) extending conically towards the free end.

5. Roller bellows pneumatic spring according to claim 1, 2 or 4, characterised in that the clamping member (53) has a central extension member (51), which is provided on its circumference with flexible locking teeth (49), which engage in flexible locking teeth (47) of an aperture (45) in the fitting (41) when the pneumatic spring tubular roller bellows is in its assembled state.

6. Roller bellows pneumatic spring according to one of claims 1 to 5, characterised in that the clamping member (15; 53) and/or the fitting (13; 41) have or has a circumferential rib (27; 65) which constricts the clamping gap (29; 63).

7. Roller bellows pneumatic spring according to claim 6, characterised in that the external diameter of the circumferential rib (27; 65) is slightly greater than the pressureless internal diameter of the end portion (23; 57) of the tubular roller bellows (11; 59) prior to the serious starting-up of the engine.

8. Roller bellows pneumatic spring according to claim 6, characterised in that the clamping face of the clamping member and/or the clamping face of the fitting have or has a plurality of circumferential ribs disposed one above the other.

9. Roller bellows pneumatic spring according to one of claims 1 to 8, characterised in that the clamping faces (74, 75) of the clamping member (73) and fitting (72) have different taperings.

## Revendications

1. Ressort pneumatique à soufflet roulant comportant un soufflet roulant tubulaire (11, 59, 71) en élastomère, qui présente au moins une partie d'extrémité (31, 57) sans noyau, qui est fixée sur une armature par serrage entre l'armature (13, 41, 72) et une pièce de serrage (53, 15, 73), présentant les caractéristiques suivantes :
- l'armature (13 ; 41) et la pièce de serrage (15 ; 53) présentent des surfaces de serrage coniques coopérantes,
- la pièce de serrage (15 ; 53) conique est montée de manière à coulisser axialement dans l'armature (13 ; 41), en formant une fente de serrage (29 ; 63),
- la pièce de serrage (15 ; 53) ferme hermétiquement à l'air la section transversale de la partie d'extrémité (23 ; 57) serrée,
caractérisé par les caractéristiques suivantes :
- l'armature (13 ; 41) peut être directement reliée à la partie du véhicule à suspendre sur ressorts,
- la pièce de serrage (15 ; 53) est déplaçable, par rapport à l'armature (13 ; 41), vers l'armature (13 ; 41), par alimentation en pression du ressort pneumatique.

2. Ressort pneumatique à soufflet roulant selon la revendication 1, caractérisé en ce que la pièce de serrage (15) est tronconique.

3. Ressort pneumatique à soufflet roulant selon les revendications 1 ou 2, caractérisé en ce que la pièce de serrage (15) présente un talon de guidage (17) centré, qui est placé de manière à coulisser axialement dans un perçage (19) de l'armature (13).

4. Ressort pneumatique à soufflet roulant selon les revendications 1 ou 3, caractérisé en ce que la pièce de serrage (43) est en forme de pot, l'enveloppe extérieure (55) de la pièce de serrage (53) s'élargissant coniquement vers l'extrémité libre.

5. Ressort pneumatique à soufflet roulant selon les revendications 1, 2 ou 4, caractérisé en ce que la pièce de serrage (53) présente un talon (51) centré qui est pourvu, sur son pourtour, de dents d'arrêt (49) flexibles qui, à l'état assemblé du soufflet roulant tubulaire du ressort pneumatique, s'engagent dans des dents d'arrêt (47) flexibles d'une ouverture (45) de l'armature (41).

6. Ressort pneumatique à soufflet roulant selon l'une des revendications 1 à 5, caractérisé en ce que la pièce de serrage (15 ; 53) et/ou l'armature (13 ; 41) présentent une nervure périphérique (27 ; 65) continue qui rétrécit la fente de serrage (29 ; 63).

7. Ressort pneumatique à soufflet roulant selon la revendication 6, caractérisé en ce que le diamètre extérieur de la nervure périphérique (27 ; 65) est légèrement supérieur au diamètre intérieur non soumis à pression de la partie d'extrémité (23 ; 57) du soufflet roulant tubulaire (11 ; 59), avant la première mise en service.

8. Ressort pneumatique à soufflet roulant selon la revendication 6, caractérisé en ce que la surface de serrage de la pièce de serrage et/ou la surface de serrage de l'armature comportent plusieurs nervures périphériques superposées.

9. Ressort pneumatique à soufflet roulant selon l'une des revendications 1 à 8, caractérisé en ce que les surfaces de serrage (74, 75) de la pièce de serrage (73) et de l'armature (72) présentent une conicité différente.
